# EUROPÄISCHE PATENTSCHRIFT

(11) **EP 0 418 681 B1**
(45) Veröffentlichungstag und Bekanntmachung des Hinweises auf die Patenterteilung: **23.06.1993**
(21) Anmeldenummer: 90117334.4
(22) Anmeldetag: 08.09.1990
(51) Int. Cl.: B29C 47/92, B29C 47/06

(54) **Koextrusionsadapter**
Coextrusion adaptor
Dispositif de coextrusion

(30) Priorität: 19.01.1990 DE 4001479; 16.09.1989 DE 8911084 U
(43) Veröffentlichungstag der Anmeldung: 27.03.1991
(73) Patentinhaber: Röhm GmbH, 64293 Darmstadt (DE)
(72) Erfinder: Lorenz, Hans, D-6100 Darmstadt (DE); Gross, Heinz, Dr. Ing., D-6101 Rossdorf 1 (DE); Schuchmann, Roland, D-6105 Ober-Ramstadt (DE); Häring, Helmut, D-6107 Reinheim (DE)

(56) Entgegenhaltungen:
- DE-A- 3 741 793
- DE-C- 3 315 184
- US-A- 4 439 125
- US-A- 4 443 397
- US-A- 4 514 812
- US-A- 4 676 936
- ANTEC'88, Spalten 165-167; S. SHAPIRO: "On line layer discrimination of multi-layer structures"

## Beschreibung

Die Erfindung betrifft eine Vorrichtung zur Herstellung eines mindestens zweischichtigen Stranges aus thermoplastisch verarbeitbarem Kunststoff durch Koextrusion, gemäß dem Oberbegriff des Anspruchs 1 sowie ein Verfahren zur Extrusion einer mehrschichtigen Bahn aus thermoplastisch verformbaren Kunststoff, gemäß dem Oberbegriff des Anspruchs 8. Der Koextrusionsadapter hat die Aufgabe, die aus zwei oder mehr Extrudern geförderten Formmassenströme zu einem gemeinsamen, zwei-oder mehrschichtigen Strang zusammenzuführen und diesen in eine Schlitzdüse weiterzuleiten, in der er auf die erwünschte Breite gestreckt und dementsprechend in der Dicke vermindert wird. Die mittlere Dicke der beteiligten Schichten nimmt dabei im gleichen Verhältnis ab wie die Gesamtdicke.

### Stand der Technik

In der US-A 4 439 125 ist eine Vorrichtung beschrieben, mit der die Dicke einer aus einer Schlitzdüse extrudierten Bahn an jedem Punkt ihrer Breite auf den gewünschten Wert eingestellt werden kann. Dazu dienen Stauelemente, die kurz vor dem Austrittsschlitz in den Massestrom eingesenkt werden können und dadurch den Massestrom an dieser Stelle drosseln. Diese Vorrichtung ist nicht dazu geeignet, in einer extrudierten Bahn aus mehreren koextrudierten Schichten die Dicke einzelner Schichten zu regulieren.

Aus der DE-A 34 05 257 ist ein Koextrusionsadapter bekannt, der dort als Sammlerblock und Umformaggregat bezeichnet wurde. In dem Koextrusionsadapter werden ein dickerer Hauptstrang und ein dünnerer Nebenstrang zusammengeführt. Aus einer anschließenden Schlitzdüse wird der vereinigte Strang zu einer mehrschichtigen Platte oder Folie extrudiert, die eine dünne Deckschicht aus dem Material des Nebenstranges enthält.

Es sind regelungstechnische Methoden bekannt, um das Dickenverhältnis der verschiedenen Schichten in einem vorgegebenen Rahmen konstant zu halten; vgl. F. Hensen, "Kunststoffberater" 11/1989, S. 59 - 64; W. Green et.al. "Kautschuk + Gummi.Kunststoffe" Band 38, Nr. 3/1985, S. 193 - 199. Damit lassen sich zwar Dickenschwankungen der Schichten in Längsrichtung beherrschen, jedoch nicht in Querrichtung.

In der Regel ist die Deckschicht nicht völlig gleichmäßig über die Breite der extrudierten Bahn verteilt. Dies kann eine Reihe von Ursachen haben, z.B. Ungleichmäßigkeiten in der Querschnittsform des Haupt- und Nebenstranges, ungleichmäßige Temperaturen innerhalb des Hauptstranges oder des Nebenstranges, woraus unterschiedliche Schmelzviskositäten und ein entsprechend unterschiedliches Strömungsverhalten folgen, oder unterschiedliche Strömungswiederstände der Formmassenstränge innerhalb des Koextrusionsadapters oder der Extrusionsdüse. Es ist schwierig, die Ursachen der ungleichmäßigen Dickenverteilung zu erkennen, und noch schwieriger, sie auszuschließen.

Gemäß der DE-A 34 05 257 werden die Dicke und Gleichmäßigkeit der koextrudierten Schicht dadurch beeinflußt, daß man das Dickenprofil des Nebenstranges im Koextrusionsadapter durch besondere Stellmittel reguliert. Man verwendet dazu einen durch Stellschrauben einstellbaren Schieber, welcher in den Nebenkanal, in dem der Nebenstrang in Richtung auf die Vereinigungsstelle beider Stränge fließt, mehr oder weniger tief hineinragt. Durch Betätigung der Stellschrauben, die auf den Schieber einwirken, kann der Strömungswiderstand in dem Nebenstrang und damit auch seine Dicke im Verhältnis zum Hauptstrang beeinflußt werden.

Diese Einstellmöglichkeit ist jedoch nicht geeignet, um Ungleichmäßigkeiten in der Verteilung der Schichtdicke über die Breite der extrudierten Bahn auszugleichen, beispielsweise wenn die Deckschicht in der Mitte dicker oder dünner als an den Rändern ist oder ein anderes nichtlineares Profil hat. In diesem Falle verwendet man im Koextrusionsadapter einen Schieber, dessen Profil zu dem Profil der Deckschicht entgegengesetzt gestaltet ist; d.h. der Schieber ragt jeweils um so tiefer in den Schmelzestrom hinein, je dicker das Profil der Deckschicht der extrudierten Bahn ist und umgekehrt. Das Schieberprofil kann nur empirisch an die Ungleichmäßigkeiten des Deckschichtprofils angepaßt werden, weil es auf diese Weise kaum möglich ist, einen bestimmten Punkt des Schieberprofils einem bestimmten Bereich des Deckschichtprofils zuzuordnen. Weiterhin ist es nicht voraussehbar, wie stark das Schieberprofil verändert werden muß, um eine in Querrichtung festgestellte Ungleichmäßigkeit des Deckschichtprofils gezielt auszugleichen.

Zur Anpassung des Schieberprofils muß die Extrusion jeweils unterbrochen, der Koextrusionsadapter abgekühlt und geöffnet werden, der Schieber herausgenommen und mechanisch nachgearbeitet, wieder eingebaut und die Extrusion erneut angefahren werden. Erweist sich die vorgenommene Änderung als unzureichend, muß der Anpassungsvorgang so oft wiederholt werden, bis die erforderliche Gleichmäßigkeit des Deckschichtprofils erreicht ist. Selbst dann kann erneut eine Anpassung notwendig werden, wenn sich nach längerem Betrieb die Strömungsverhältnisse in der Extrusionsanlage verändert haben und neue Ungleichmäßigkeiten der Deckschicht auftreten.

Um die Anpassung des Schiebers zu vereinfachen, hat R. Reitemeyer ("Kunststoffe" Bd.78, 1988, Heft 5, S.395-397) vorgeschlagen, den Koextrusionsadapter so zu gestalten, daß der Schieber wie eine Kassette seitlich in eine entsprechende Führung eingeschoben werden kann. Dadurch wird zwar eine vollständige Demontage des Adapters bei jedem Anpassungsschritt vermieden, nicht aber die Unterbrechung der Koextrusion. Weiterhin hat er vorgeschlagen, den Schieber mehrteilig auszubilden, anscheinend um dadurch unterschiedlich tief in den Schmelzestrom hineinragende Teilabschnitte kombinieren zu können.

Bei einer Extrusionsvorrichtung gemäß DE-A 37 41 793 wurde diese Ausgestaltung dahingehend weiterentwickelt, daß die in Querrichtung nebeneinander in den Nebenkanal hineinragenden Teilabschnitte des mehrteiligen Schiebers in Stellrichtung gegeneinander verschiebbar angeordnet und durch getrennte Stellmittel einstellbar sind. Die jeweilige Einstellung der Teilabschnitte wird durch eine Meßvorrichtung abgetastet und die Meßgröße zur Beeinflussung der Stellmittel verwendet. Als solche können Piezotranslatoren verwendet werden. Die erfaßten Werte können, bezogen auf die spezielle Kunststoffbahn, die gerade hergestellt wird, einem Rechner zugeführt und in eine Programmierung aufgenommen werden.

Dadurch ist es zwar möglich, die Extrusionsanlage schnell und weitgehend selbsttätig auf verschiedene, vorher festgelegte Extrusionsbedingungen einzustellen. Dagegen erlaubt es die bekannte Vorrichtung nicht, die Extrusionsvorrichtung selbsttätig an sich im Betrieb verändernde Extrusionsbedingungen anzupassen. Solche Veränderungen können aus vielfältigen Ursachen auftreten; beispielsweise durch Temperaturschwankungen, die sich aus Luftbewegungen in der Umgebung der Extrusionsanlage ergeben können, durch Änderung der Schmelzeviskosität infolge einer geringfügig anderen Beschaffenheit des zugeführten Kunststoffes oder durch Änderungen des Strömungswiderstandes des Schmelzestromes infolge von Abnutzung oder Korrosion in den Strömungswegen. Zwar kann man in solchen Fällen die Schmelzeströmung im Koextrusionsadapter durch Einwirkung auf die Stellglieder an die geänderten Bedingungen anpassen oder das Einstellprogramm entsprechend ändern, jedoch setzt eine solche Anpassung stets bewußte Eingriffe durch das Bedienungspersonal voraus, die nur mit einer erheblichen Verzögerung erfolgen können.

### Aufgabe und Lösung

Der Erfindung liegt die Aufgabe zugrunde, eine Vorrichtung zur Koextrusion eines mindestens zweischichtigen Stranges aus thermoplastisch verarbeitbarem Kunststoff, enthaltend einen Koextrusionsadapter mit einstellbarem Schieber bereitzustellen, die sich ohne Demontage des Koextrusionsadapters, gegebenenfalls während des Extrusionsbetriebs, entsprechend den jeweils auftretenden Ungleichmäßigkeiten des extrudierten Deckschichtprofils einstellen läßt.

Die gestellte Aufgabe wird erfindunggemäß bei einer gattungsmäßigen Vorrichtung zur Herstellung eines mindestens zweischichtigen Stranges aus thermoplastisch verarbeitbarem Kunststoff durch Koextrusion, enthaltend
a) wenigstens zwei Extruder zur Bildung von wenigstens zwei Schmelzeströmen aus thermoplastischem Kunststoff,
b) einen Koextrusionsadapter mit wenigstens zwei Eintrittsöffnungen, an die die Extruder angeschlossen sind und die mit einem Hauptkanal und mindestens einem in den Hauptkanal einmündenden Nebenkanal in Verbindung stehen, enthaltend Mittel zur Regulierung des durch den Nebenkanal fließenden Schmelzestromes in Form eines mehrteiligen Schiebers aus mehreren in Querrichtung nebeneinander in den Nebenkanal hineinragenden Teilabschnitten, die in Stellrichtung gegeneinander verschiebbar angeordnet und durch getrennte Stellmittel einstellbar sind, sowie eine Austrittsöffnung für den mindestens zweischichtigen Strang,
c) eine Schlitzdüse, die an die Austrittsöffnung des Koextrusionsadapters angeschlossen ist und in der der zwei- oder mehrschichtige Strang auf die erwünschte Breite gestreckt und als zwei- oder mehrschichtige Bahn extrudiert wird,
d) Mittel zur Kühlung und gegebenfalls Glättung der koextrudierten Bahn,

in der Weise gelöst, daß die Vorrichtung zusätzlich
e) Mittel zur selektiven Dickenmessung einzelner Schichten über die Breite der koextrudierten Bahn und
f) Mittel zur Einstellung der Stellglieder des Koextrusionsadapters in Abhängigkeit von den an der extrudierten Bahn gemessenen Dicken enthält.

Erfindungsgemäß ist auch ein Verfahren mit den Merkmalen des Anspruchs 8 vorgesehen.

### Wirkungsweise und Vorteile der Erfindung

Während der bekannte Koextrusionsadapter durch getrennte Einstellung der Teilstücke des mehrteiligen Schiebers jeweils auf einen bestimmten, vorher festgelegten Betriebspunkt eingestellt wurde, ist es mit der erfindungsgemäßen Vorrichtung erstmals möglich, den Koextrusionsadapter während des laufenden Betriebs unmittelbar nach den Eigenschaften der extrudierten Bahn in der erforderlichen Weise nachzustellen. Insbesondere ist es möglich, eine solche Anpassung selbsttätig durchzuführen. Je feiner der Schieber unterteilt ist, umso genauer läßt sich ein eng begrenzter Bereich, in dem eine Abweichung vom Sollwert der Schichtdicke auftritt, nachregulieren. Aus diesem Grunde ist es vorteilhaft, wenn der mehrteilige Schieber aus mehr als drei Teilabschnitten besteht, insbesondere wenn keiner der Teilabschnitte des mehrteiligen Schiebers mehr als die Hälfte der Gesamtbreite ausmacht, sondern die Teilabschnitte etwa gleichbreit sind.

Daher lassen sich während der laufenden Extrusion erfindungsgemäß wahlweise breitere oder schmälere Teilabschnitte des Schiebers unabhängig voneinander durch getrennte Stellmittel einstellen, ohne daß die Extrusion unterbrochen und der Koextrusionsadapter auseinandergenommen werden müßte.

Zur Anpassung des Koextrusionsadapters an eine bestimmte Extrusionsdüse wird die Auswirkung der Verstellung eines einzelnen Stellmittels auf das Extrudat im laufenden Betrieb ermittelt. Dadurch wird jedem Stellmittel ein bestimmter Breitenbereich der extrudierten Bahn zugeordnet und gleichzeitig das Ausmaß der Verstellung mit der bewirkten Schichtdickenveränderung in Beziehung gesetzt. Danach kann jeder gemessenen Dickenabweichung vom Sollwert eine genaue Stellgröße für ein bestimmtes Stellglied zugeordnet werden.

### Ausführung der Erfindung

Zur Erläuterung der Erfindung dienen die Figuren 1 bis 3, die in schematisierter Weise ein einfaches Ausführungsbeispiel des Koextrusionsadapters wiedergeben.
**Figur 1** stellt einen Längsschnitt durch den Koextrusionsadapter in Extrusionsrichtung dar;
**Figur 2** zeigt einen Querschnitt längs der Linie A-A in Fig.1.
**Figur 3** stellt eine andere Anordnung von Teilabschnitten des Schiebers und Stellmitteln im Längs- und Querschnitt dar.

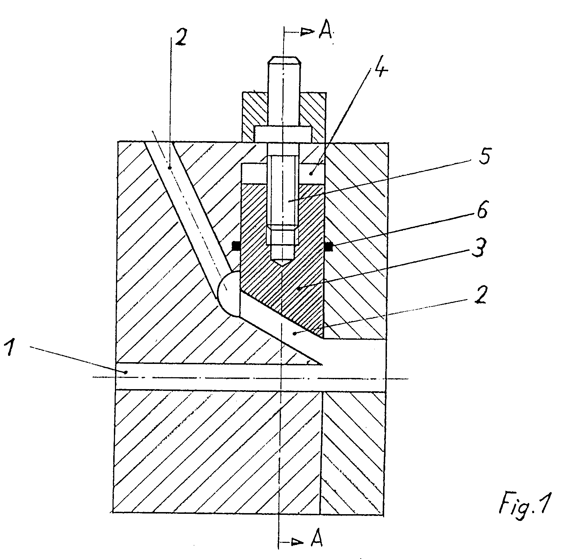

In Fig.1 bezeichnet 1 den Hauptkanal und 2 den Nebenkanal. Der Schieber 3 ist in einer Führung 4 verschiebbar angeordnet, so daß er je nach der Stellung der Stellmittel 5 mehr oder weniger tief in den Nebenkanal 2 hineinragen und dessen Höhe verändern kann. Zweckmäßig ist in einer Nut 6 in der Wandung der Schieberführung 4 ein Dichtungsband aus einem hitzebeständigen Elastomermaterial angeordnet. Der Schieber 3 ist in mehrere Teilabschnitte 3', 3'' u.s.w. geteilt, die in Stellrichtung gegeneinander verschiebbar angeordnet sind und durch getrennte Stellmittel 5', 5'' u.s.w. unabhängig voneinander einstellbar sind. Die einzelnen Teilabschnitte 3', 3'' können unter sich durch Dichtungsbänder 6' abgedichtet sein.

Es ist zweckmäßig, daß keiner der Teilabschnitte des mehrteiligen Schiebers mehr als die Hälfte der Gesamtbreite ausmacht. In der Regel besteht der Schieber aus mehr als drei Teilabschnitten, die vorzugsweise alle etwa gleich breit sind. Um eine sehr feine Regulierung der Dicke des Nebenstranges zu bewirken, kann es sinnvoll sein, den Schieber in beispielsweise 5 bis 20 lamellenartige Teilabschnitte von jeweils nur wenigen Millimetern Breite aufzuteilen. Der Zahl der Teilabschnitte ist nur dann eine Grenze gesetzt, wenn jeder durch ein eigenes Stellmittel beeinflußt wird, denn auch bei versetzter Stellung können diese nicht beliebig dicht nebeneinander angeordnet und betätigt werden. Je dichter die unabhängig einstellbaren Stellmittel angeordnet sind, um so leichter ist es möglich, Dickenschwankungen in engbegrenzten Bereichen auszugleichen.

Es ist allerdings nicht grundsätzlich erforderlich, daß auf jeden Teilabschnitt ein eigenes Stellmittel einwirkt.

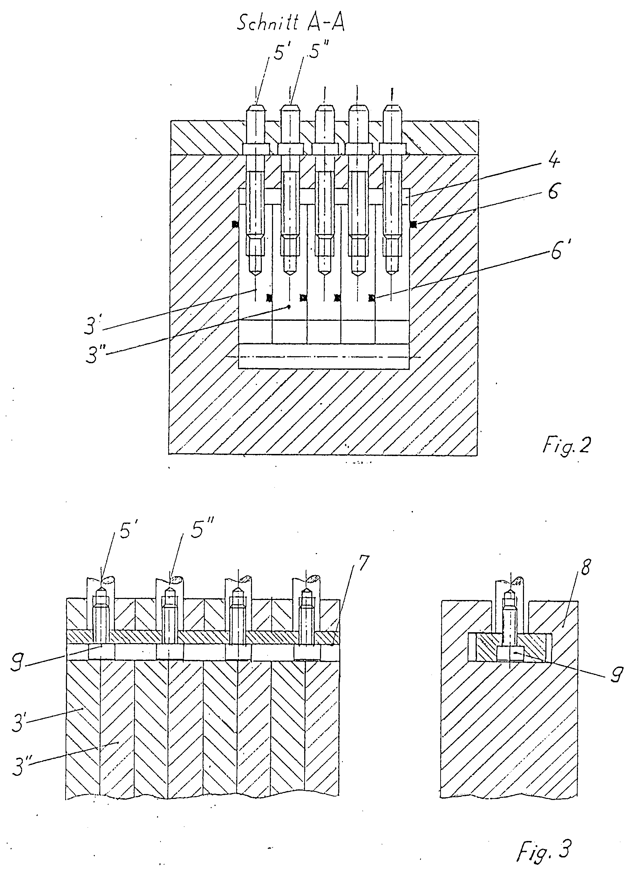

Wie in Fig. 3 dargestellt, kann eine größere Zahl lamellenartiger Teilabschnitte 3', 3'' mittels einer geringeren Zahl von Stellmitteln 5', 5'' beeinflußt werden, wenn die Stellkraft über ein Band 7 von geeigneter Elastizität jeweils auf eine Gruppe von mehreren Teilabschnitten einwirkt, die insoweit nur teilweise voneinander unabhängig durch getrennte Stellmittel einstellbar sind. Man kann auf diese Weise ein ziemlich gleichmäßig gebogenes Profil des Schiebers einstellen, was beispielsweise dann sinnvoll ist, wenn eine Ungleichförmigkeit der Dickenverteilung von der Mitte bis zum Rand verläuft und über einen entsprechend breiten Bereich ausgeglichen werden soll. Damit die Teiläbschnitte auch einer Hubbewegung der Stellmittel folgen, sollten ihre Köpfe 8 das Band 7 umgreifen und die unteren Enden der Stellmittel zugfest, z.B. durch Schrauben 9, mit dem Band 7 verbunden sein.

Der Hauptkanal kann im Koextrusionsadapter eine Dicke von beispielsweise 2 bis 20 und eine Breite von 30 bis 100 mm haben. Der oder die Nebenkanäle sind vorzugsweise, aber nicht notwendigerweise dünner als der Hauptkanal. In der Extrusiondüse wird aus dem vereinigten Strang eine mehrschichtige Bahn, z.B. eine Platten- oder Folienbahn von 0,1 bis 12 mm Dicke und 500 bis 3 000 mm Breite geformt, die aus Einzelschichten von 0,01 bis 12 mm Dicke bestehen kann. Bei einer bevorzugten Ausführungsform besteht die extrudierte Bahn aus einer Haupt- oder Kernschicht, die aus dem Hauptstrang gebildet wird und 80 bis 99,9 Gew.-% des jeweils durchlaufenden Materials enthält, und wenigstens einer, vorzugsweise zwei daran haftenden Deckschichten, die den verbleibenden Teil des Materials enthalten und aus dem oder den Nebensträngen gebildet werden. In die Kernschicht können in Längsrichtung der extrudierten Bahn durch Kernstücke, die im Austrittsschlitz der Extrusionsdüse angeordnet sind, Hohlräume eingeformt werden, die gegebenenfalls nur durch schmale Stege voneinander getrennt sind.

Als Stellmittel 5 eignen sich Vorrichtungen, die auch bei bekannten Koextrusionsadaptern zur Schiebereinstellung verwendet werden. Für größere Stellwege sind Schraubbolzen geeignet, deren aus dem Koextrusionsadapter herausragender Kopf mittels eines Stellrades oder eines Stellschlüssels gedreht werden kann. -Für den technischen Betrieb eignen sich ein von einem Stellmittel zum anderen verschiebbarer Stellroboter oder auch an jedem Stellmittel fest angebrachte Stellmotoren. Auch Hydraulikkolben sind als ansteuerbare Stellmittel verwendbar. Für die Feineinstellung während der selbsttätigen Regelung eignen sich elektrische beheizte Wärmedehnbolzen und Piezotranslatoren.

Durch probeweises Verstellen kann jedem Stellmittel ein Wirkungsbereich in der extrudierten Bahn zugeordnet werden. Für die selektive Dickenmessung einzelner Schichten einer koextrudierten Bahn gibt es erprobte spektro-photometrische oder radiometrische Methoden, die auf dem unterschiedlichen Absorptionsverhalten der beteiligten thermoplastisch verarbeitbaren Kunststoffe beruhen. Der damit ermittelte Ist-Wert kann mit dem Soll-Wert verglichen und die Differenz über einen Regler in eine entsprechende Stellgröße für das zugehörige Stellmittel umgesetzt werden. Dazu können gebräuchliche Mittel der Regelungstechnik, wie Mikroprozessoren oder Rechner verwendet werden.

Mit einer solchen Anordnung ist eine Dickenregelung der extrudierten Bahn bzw. einzelner koextrudierter Schichten möglich. Zu diesem Zweck wird die zu regelnde Schichtdicke an mehreren, über die Breite der Bahn verteilten Stellen gemessen und automatisch jeweils der zugehörige Teilabschnitt des Schiebers mittels eines in der Regel elektrisch ansteuerbaren Stellmittels verstellt. Für die Dickenmessung können mehrere fest angeordnete Sensoren oder ein automatisch über die Bahnbreite verschiebbarer Sensor verwendet werden. Durch die Erfindung ist es möglich, extrudierte Bahnen mit sehr engen Toleranzen der Einzelschichtdicken zu erzeugen.

Es versteht sich, daß im Sinne der Erfindung koextrudierte Bahnen aus einer beliebigen Zahl von Schichten mit beliebig wählbaren, regulierbaren Dicken hergestellt werden können. Zu diesem Zweck werden Koextrusionsadapter verwendet, in denen mehrere Nebenstränge hintereinander auf den Hauptstrang aufgelegt werden, wobei jeder Nebenstrang für sich im Sinne der Erfindung reguliert werden kann. Ebenso können auf beiden Seiten des Hauptstranges ein oder mehrere Nebenstränge aufgelegt werden. Auch der Hauptstrang selbst kann erforderlichenfalls in der gleichen Weise reguliert werden.

Die Technik der Koextrusion ist an sich bekannt. Sie setzt voraus, daß die Formmassen des Haupt- und Nebenstranges bei gleichen Temperaturen unzersetzt thermoplastisch verarbeitbar sind und nicht schädigend aufeinander einwirken.

Sind die Formmassen in den Hauptbestandteilen gleich und nur durch die An- oder Abwesenheit von Farbstoffen oder anderen Zusatzstoffen unterschieden, so entsteht in der Regel eine koextrudierte Bahn, in der die Schichten fest aneinander haften. Das gleiche gilt, wenn die Stränge aus verschieden, aber gut verträglichen Formmassen bestehen. Im Falle geringer Verträglichkeit kann es vorkommen, daß die Schichten nur schwach aneinander haften und die Deckschicht gegebenenfalls von der Kernschicht abgezogen werden kann. Sie kann dann die Aufgabe einer temporären Schutzschicht übernehmen.

## Patentansprüche

1. Vorrichtung zur Herstellung eines mindestens zweischichtigen Stranges aus thermoplastisch verarbeitbarem Kunststoff durch Koextrusion, enthaltend
a) wenigstens zwei Extruder zur Bildung von wenigstens zwei Schmelzeströmen aus thermoplastischem Kunststoff,
b) einen Koextrusionsadapter mit wenigstens zwei Eintrittsöffnungen, an die die Extruder angeschlossen sind und die mit einem Hauptkanal (1) und mindestens einem in den Hauptkanal einmündenden Nebenkanal (2) in Verbindung stehen, enthaltend Mittel zur Regulierung des durch den Nebenkanal fließenden Schmelzestromes in Form eines mehrteiligen Schiebers (3) aus mehreren in Querrichtung nebeneinander in den Nebenkanal hineinragenden Teilabschnitten (3', 3''), die in Stellrichtung gegeneinander verschiebbar angeordnet und durch getrennte Stellmittel (5) einstellbar sind, sowie eine Austrittsöffnung für den mindestens zweischichtigen Strang,
c) eine Extrusionsdüse, die an die Austrittsöffnung des Koextrusionsadapters angeschlossen ist und in der der zwei- oder mehrschichtige Strang auf die erwünschte Breite gestreckt und als zwei- oder mehrschichtige Bahn durch einen Austrittsschlitz extrudiert wird,
d) Mittel zur Kühlung und gegebenfalls Glättung der koextrudierten Bahn,
gekennzeichnet durch
e) Mittel zur selektiven Dickenmessung einzelner Schichten der koextrudierten Bahn an mehreren, über die Breite der Bahn verteilten Stellen,
f) Mittel zur Einstellung der Stellglieder (5) des Koextrusionsadapters in Abhängigkeit von den an der extrudierten Bahn gemessenen Dicken.

2. Vorrichtung nach Anspruch 1, dadurch gekennzeichnet, daß keiner der Teilabschnitte (3', 3'') des mehrteiligen Schiebers (3) des Koextrusionsadapters mehr als die Hälfte der Gesamtbreite ausmacht.

3. Vorrichtung nach Anspruch 1, dadurch gekennzeichnet, daß der mehrteilige Schieber (3) des Koextrusionsadapters aus mehr als drei Teilabschnitten (3', 3'') besteht.

4. Vorrichtung nach Anspruch 1, dadurch gekennzeichnet, daß die Teilabschnitte (3', 3'') des Koextrusionsadapters etwa gleich breit sind.

5. Vorrichtung nach Anspruch 1, dadurch gekennzeichnet, daß als Mittel zur Dickenmessung mehrere, über die Bahnbreite verteilte Sensoren fest angeordnet sind.

6. Vorrichtung nach Anspruch 1, dadurch gekennzeichnet, daß als Mittel zur Dickenmessung ein Sensor über die Bahnbreite verschiebbar angeordnet ist.

7. Vorrichtung nach Anspruch 1, dadurch gekennzeichnet, daß in dem Schlitz der Extrusionsdüse Kernstücke zur Bildung von Hohlräumen in Längsrichtung der extrudierten Bahn angeordnet sind.

8. Verfahren zur Extrusion einer mehrschichtigen Bahn aus thermoplastisch verformbarem Kunststoff durch Aufschmelzen der Kunststoffe in wenigstens zwei Extrudern, Einleiten der geschmolzenen Kunststoffstränge in einen Koextrusionsadapter unter Bildung eines Hauptstranges und wenigstens eines Nebenstranges, Vereinigung der Stränge zu einem mehrschichtigen Strang, wobei wenigstens ein Nebenstrang in dem Koextrusionsadapter durch einen hineinragenden mehrteiligen Schieber (3) reguliert wird, indem wenigstens ein Teil der Teilabschnitte (3', 3'') des mehrteiligen Schiebers während der Extrusion in Stellrichtung voneinander unabhängig durch getrennte Stellmittel (5) eingestellt wird, Einleiten des mehrschichtigen Stranges in eine Extrusionsdüse, in der er auf die gewünschte Breite gestreckt und als mehrschichtige Bahn extrudiert wird, Kühlen und gegebenenfalls Glätten der Bahn, dadurch gekennzeichnet, daß die Dicke einzelner Schichten der extrudierten mehrschichtigen Bahn an mehreren, über die Breite der Bahn verteilten Stellen selektiv gemessen und die Teilabschnitte (3', 3'') des mehrteiligen Schiebers in Abhängigkeit von den gemessenen Dicken verstellt werden.

9. Verfahren nach Anspruch 8, dadurch gekennzeichnet, daß die Teilabschnitte (3', 3'') des Koextrusionsadapters mittels geregelter Stellglieder (5) verstellt werden.

## Claims

1. A device for preparing a strand, which is at least two-layered and made of thermoplastically workable plastics, by coextrusion comprising
(a) at least two extruders for forming at least two melting streams of thermoplastic plastics,
(b) a coextrusion adaptor with at least two inlet openings, to which the extruders are connected and which are in connection with a main channel (1) and at least one side channel (2) opening into said main channel, comprising means for regulating the melting stream flowing through the side channel, said means being in the form of a multi-part slide (3) consisting of a plurality of sections (3', 3'') projecting in the transverse direction, side by side, into the side channel, said sections being arranged so as to be displaceable, relative to one another, in the direction of adjustment and adjustable by separate adjusting means (5), as well as an outlet opening for the strand which is at least two-layered,
(c) an extrusion die which is connected to the outlet opening of the coextrusion adaptor and in which the two- or multi-layered strand is stretched to the required width and extruded as a two- or multi-layered sheet through an outlet slot,
(d) means for cooling and, optionally, smoothing the coextruded sheet,
characterised by
(e) means for the selective measurement of the thickness of individual layers of the coextruded sheet at several points distributed over the width of the sheet,
(f) means for adjusting the adjusting members (5) of the coextrusion adaptor as a function of the thicknesses measured on the extruded sheet.

2. A device according to claim 1, characterised in that none of the sections (3', 3'') of the multi-part slide (3) of the coextrusion adaptor makes up more than half the total width.

3. A device according to claim 1, characterised in that the multi-part slide (3) of the coextrusion adaptor comprises more than 3 sections (3', 3'').

4. A device according to claim 1, characterised in that the sections (3', 3'') of the coextrusion adaptor are of a substantially equal width.

5. A device according to claim 1, characterised in that sensors distributed over the width of the sheet are fixedly arranged as means for the measurement of the thickness.

6. A device according to claim 1, characterised in that a sensor is arranged shiftably over the width of the sheet as means for the measurement of the thickness.

7. A device according to claim 1, characterised in that core pieces are arranged in the slot of the extrusion die for forming cavities in the longitudinal direction of the extruded sheet.

8. A process for extruding a multi-layered sheet of thermoplastically deformable plastics by melting the plastics in at least two extruders, introducing the molten plastics strands into a coextrusion adaptor, while forming a main strand and at least one side strand, combining the strands to form a multi-layered strand, at least one side strand being regulated in the coextrusion adaptor by a projecting multi-part slide (3), wherein at least a part of the sections (3, 3'') of the multi-part slide are set in the direction of adjustment, independently of one another, during the extrusion, by means of separate adjusting means, introducing the multi-layered strand into an extrusion die, in which it is stretched to the required width and extruded as a multi-layered sheet, cooling and, optionally, smoothing the sheet, characterised in that the thickness of the individual layers of the extruded multi-layered sheet is selectively measured at several points distributed over the width of the sheet and the sections (3', 3'') of the multi-part slide are adjusted as a function of the thicknesses measured.

9. A process according to claim 8, characterised in that the sections (3', 3'') of the coextrusion adaptor are adjusted by means of controlled adjusting members (5).

## Revendications

1. Dispositif pour la production, par co-extrusion, d'un boudin en deux couches au moins de matière plastique transformable thermoplastiquement, comprenant
a) au moins deux extrudeuses pour la formation d'au moins deux courants de masse fondue de matière thermoplastique,
b) un adaptateur de co-extrusion comportant au moins deux orifices d'admission auxquelles les extrudeuses sont raccordées et qui sont en communication avec un canal principal (1) et avec au moins un canal accessoire (2) qui débouche dans le canal principal, cet adaptateur contenant des moyens pour le réglage du courant de masse fondue qui coule à travers le canal auxiliaire, sous la forme d'une vanne en plusieurs parties (3), composée de plusieurs segments (3', 3'') qui font saillie côte à côte en direction transversale dans le canal auxiliaire, sont montés de manière à pouvoir être déplacés les uns par rapport aux autres dans la direction du réglage et sont réglables par des moyens de réglage séparés (5), ainsi qu'un orifice de sortie pour le boudin en deux couches au moins,
c) une filière d'extrusion que est raccordée à l'orifice de sortie de l'adaptateur de co-extrusion et dans laquelle le boudin en deux ou plusieurs couches est étalé à la largeur désirée et est extrudé sous forme de nappe en deux ou plusieurs couches à travers une fente de sortie,
d) des moyens pour le refroidissement et éventuellement le lissage de la nappe co-extrudée,
caractérisé par
e) des moyens pour la mesure d'épaisseur sélective de couches individuelles de la nappe co-extrudée, en plusieurs points répartis sur toute la largeur de la nappe,
f) des moyens pour le réglage des vérins (5) de l'adaptateur de co-extrusion en fonction des épaisseurs mesurées sur la nappe extrudée.

2. Dispositif selon la revendication 1, caractérisé en ce qu'aucun des segments (3', 3'') de la vanne en plusieurs parties (3) de l'adaptateur de co-extrusion ne mesure plus de la moitié de la largeur totale.

3. Dispositif selon la revendication 1, caractérisé en ce que la vanne en plusieurs parties (3) de l'adaptateur de co-extrusion se compose de plus de trois segments (3', 3'').

4. Dispositif selon la revendication 1, caractérisé en ce que les segments (3', 3'') de la vanne de l'adaptateur de co-extrusion ont à peu près la même largeur.

5. Dispositif selon la revendication 1, caractérisé en ce que plusieurs détecteurs, répartis sur toute la largeur de la nappe, sont disposés en position fixe en tant que moyens pour la mesure d'épaisseur.

6. Dispositif selon la revendication 1, caractérisé en ce qu'un détecteur est disposé de manière à pouvoir être déplacé sur toute la largeur de la nappe, en tant que moyen de mesure d'épaisseur.

7. Dispositif selon la revendication 1, caractérisé en ce que des noyaux, pour la formation de vides dans la direction longitudinale de la nappe extrudée, sont disposés dans la fente de la filière d'extrusion.

8. Procédé pour l'extrusion d'une nappe en plusieurs couches en matière plastique transformable thermoplastiquement, par fusion des matières plastiques dans deux extrudeuses au moins, introduction des boudins de matière plastique fondus dans un adaptateur de co-extrusion, avec formation d'un boudin principal et d'au moins un boudin auxiliaire, réunion des boudins en un boudin en plusieurs couches, un boudin auxiliaire au moins étant réglé dans l'adaptateur de co-extrusion par une vanne saillante en plusieurs parties (3), par le fait que les segments (3', 3'') de la vanne en plusieurs parties sont réglés, au moins en partie, indépendamment les uns des autres dans la direction de réglage par des moyens de réglage séparés (5) pendant l'extrusion, introduction du boudin en plusieurs couches dans une filière d'extrusion, dans laquelle il est étalé à la largeur désirée et est extrudé sous forme de nappe en plusieurs couches, refroidissement et éventuellement lissage de la nappe, caractérisé en ce que les épaisseurs de couches individuelles de la nappe en plusieurs couches extrudée sont mesurées sélectivement en plusieurs points répartis sur toute la largeur de la nappe et les segments (3', 3'') de la vanne en plusieurs parties sont réglés en fonction des épaisseurs mesurées.

9. Procédé selon la revendication 8, caractérisé en ce que les segments (3', 3'') de la vanne de l'adaptateur de co-extrusion sont réglés au moyen de vérins (5) à réglage automatique.
